# EUROPEAN PATENT APPLICATION

(11) **EP 2 868 941 A1**
(43) Date of publication of application: **06.05.2015**
(21) Application number: 14158776.6
(22) Date of filing: 11.03.2014
(51) Int. Cl.: F16D 3/38, F16D 3/84

(54) **A universal joint**

(30) Priority: 04.11.2013 IT RE20130081
(71) Applicant: Eurocardan Societa' per Azioni, 66041 Atessa, Chieti (IT)
(72) Inventor: Aurora, Mario, 66023 Francavilla al Mare, Chieti (IT)
(74) Representative: Corradini, Corrado

(57) **Abstract**

An embodiment of the present invention discloses a universal joint (110) comprising a cross (125) to which two forks are hinged, of which a first fork (130) comprises a hub (145) fixable to an end of a connecting shaft (105) and a second fork (135) comprising a hub (160) provided with a coaxial cavity (175) able to receive a power take-off (900), and a protective casing (225) which can cover the first and second fork, the protective casing comprising: a first cover (230) solidly constrained to the first fork (130) and coupled thereto by a rotational joint (235), which enables reciprocal rotations of the hub (145) of the first fork (130) about the axis (B); a second cover (255) solidly constrained to the second fork (135) and coupled thereto by a further rotational joint (260), which enables reciprocal rotations of the hub of the second fork (135) about the axis (A); and a flexible sleeve (275) interposed so as to connect the first cover (230) to the second cover (255).

## Description

The present invention relates in general to universal shafts and in particular universal shafts used in the agricultural sector for transmitting motion from a drive power take-off, typically associated to a tractor, to a driven power take-off, typically associated to an agricultural tool which is drawn, borne or semi-borne by the tractor.

As is known, universal shafts for agricultural use generally comprise a first universal joint destined to be connected to the power take-off of the tractor, a second universal joint destined to be connected to the power take-off of the tool, and a shaft that connects the first and the second universal joint.

The connecting shaft can be telescopic, so as to be able to accommodate the variations of distance between the tractor and the tool which can occur during manoeuvring phases or due to the bumpy surface of the terrain. Where it is telescopic, the connecting shaft normally comprises two tubes having profiled sections, which are coaxially inserted one internally of another, so as to realize a sliding coupling which constrains them reciprocally in rotation but which enables them to slide axially.

Each universal joint normally comprises a cross to which two forks are hinged, of which a fixed form that is solidly fixed to the end of the connecting shaft, and a mobile fork which can be engaged on the respective power take-off.

The power take-off is essentially conformed as a grooved rotary shaft, which projects from the tractor or the agricultural too, exhibiting a beveling at a free end thereof and a circumferential gully in an intermediate position.

To enable engagement with the power take-off, the mobile fork of each universal joint normally comprises a hub centrally delimiting a grooved cavity substantially snugly accommodating the power take-off, such as to realize a coupling which constrains them reciprocally in rotation.

The mobile fork is further provided with a blocking mechanism, which cooperates with the circumferential gully of the power take-off and can be activated between an engaged configuration, in which it axially constrains the power take-off in the central cavity of the hub, and a disengaged configuration in which it frees the constraint, enabling reciprocal engagement and disengagement. Typical blocking mechanisms are for example those known by the terms "push-button system" and "double row ball bearing systems".

Owing to the high velocity of rotation and the power transmitted, as well as to the presence of mobile parts which define recesses and projections that are more or less accentuated, the universal shaft represents a rather dangerous mechanical device.

For this reason, each universal shaft usually also comprises a protective casing, which is able to cover the universal joints and the connecting shaft.

This protective casing generally comprises two covers each cladding a respective universal joint and an intermediate tube which develops between the two covers, such as to clad the connecting shaft. In a case where the connecting shaft is telescopic, the intermediate tube can be divided into two parts, one slidably inserted in the other, and each fixed to a respective cover. Each cover is rotatably coupled to the fixed fork of the respective universal joint by means of a connecting washer, so that the whole protective casing can be engaged to a fixed part of the tractor and can remain stationary while the universal shaft rotates internally thereof.

As they are solidly constrained to the fixed forks, known protection covers are not able to follow the movements of the mobile forks, so it can happen that during some manoeuvring or motion phases along particularly uneven ground the universal shaft becomes arranged in a configuration in which the covers are not able to effectively cover the joints, leaving some parts of them dangerously exposed.

This drawback is still more accentuated if we consider that each cover normally has a limited axial development, necessary for leaving the hub of the mobile fork and the blocking mechanism of the power take-off at least partially uncovered.

An aim of the present invention is to disclose a protection system which enables obviating the drawbacks of the prior art.

A further aim is to attain this objective with a solution that is simple, rational and relatively inexpensive.

These and other aims are attained with the characteristics of the invention that are reported in the independent claim. The dependent claims delineate preferred or particularly preferred aspects of the proposed solution.

In particular, an embodiment of the present invention relates to a universal joint comprising a cross to which two forks are hinged, of which a first fork comprises a hub fixable to an end of a connecting shaft and a second fork comprising a hub provided with a coaxial cavity able to receive a power take-off, and a protective casing which can cover the first and second fork, characterised in that the protective casing comprises:
a first cover solidly constrained to the first fork and coupled thereto by a rotational joint, which enables reciprocal rotations of the hub of the first fork about the axis,
a second cover solidly constrained to the second fork and coupled thereto by a further rotational joint, which enables reciprocal rotations of the hub of the second fork about the axis, and
a flexible sleeve interposed so as to connect the first cap to the second cover.

With this solution, the first fork, the second fork and the sleeve overall define a whole casing which, thanks to the flexibility of the intermediate sleeve, aids and follows each relative displacement between the two forks of the universal joint, guaranteeing an effective protection in all functioning conditions.

In a preferred aspect of the invention, the flexible intermediate sleeve is bellows-conformed.

In this way, the intermediate sleeve can be advantageously made of a sufficiently resistant material for effectively protecting the universal joint, as the bellows conformation enables them to deform without opposing excessive resistance to the reciprocal movements of the two forks on the cross.

In a further preferred aspect of the invention, the hub of the second fork comprises a blocking mechanism able to axially constrain the power take-off to the central cavity, and the second cover comprises a mobile command organ, which is activatable from outside the protection casing and can act on the blocking mechanism so as to release the constraint.

With this solution, the second cover can be advantageously conformed so as to substantially completely cover the second fork, so that the engaging and disengaging of the power take-off can in any case be commanded from outside the protection casing.

In a possible embodiment of the invention, the command organ comprises an annular plate, which is coaxially inserted on the hub of the second fork and is provided with one or more appendages which project externally of the second cover through respective slots, wherein the slots are profiled in such a way that the plate is solid in rotation with the second cover and can slide with respect thereto in the direction of the axis of the hub of the second fork. This solution is particularly advantageous for enabling activating from outside of a blocking mechanism belonging for example to the category of "double row ball bearing systems".

In an aspect of the invention, a blocking mechanism of this type can comprise:
a plurality of radial holes passing through the hub of the second fork,
a plurality of pawls, each of which is inserted in a respective hole of the radial holes and can slide internally thereof between an engaged position, in which it at least partially projects into the cavity of the hub, and a disengaged position, in which it leaves the cavity substantially unoccupied,
a collar coaxially inserted on the hub and able to slide thereon in an axial direction between a blocked position, in which it occludes the radial holes and constrains each pawl to remain the engaged position, and an unblocked position, in which it frees the radial holes and enables each pawl to displace into the disengaged position thereof, and
elastically-acting means for constantly pushing the collar into a blocked position.

With this solution, the annular command plate can simply be placed in contact with the collar of the blocking mechanism, such as to be able to push them into the unblocking position by acting on the outside of the protection casing.

In a further possible embodiment of the invention, the command organ comprises a button, which is solidly constrained to the second cover and is mobile thereon in a transversal direction with respect to the axis of the hub of the second fork.

This solution is particularly advantageous as it enables activation from outside of a blocking mechanism belonging for example to the "push-button system" type.

In an aspect of the invention, a blocking mechanism of this type can comprise:
a bolt solidly constrained to the hub of the second fork and able to slide, along an axis that is perpendicular to the axis of the hub, between an engaged position, in which it partially occupies the cavity of the hub, and a disengaged position, in which it leaves the cavity substantially unoccupied, elastically-acting means for constantly pushing the bolt into the engaged position, and
a pin fixed to the bolt and able to be pressed so as to move the bolt into a disengaged position, in opposition to the elastically-acting means.

Thanks to this solution, the external command button can be predisposed in such a way as to be able to align with the pin of the bolt, when the second cover is in a predetermined angular position with respect to the second fork, so that the activating thereof enables pressing the pin of the bolt from externally of the protection casing.

In this regard, in a preferred aspect of the invention the rotational joint between the second fork and the second cover comprises a free wheel, which can enable a reciprocal rotation in a predetermined direction and prevent rotation in an opposite direction, when the second fork and the second cover are in a reciprocal angular position.

In this way it is advantageously very simple for the operators to arrange the second cover in such a way as to enable the external button to act on the pin of the bolt.

In an aspect of the invention, the command button is conformed as a pin having a perpendicular axis with respect to the axis of the hub of the second fork, which is coaxially inserted in a through-hole in the second cover and able to slide internally thereof between a distal position and a proximal position to the axis of the hub.

In this way, the external button is advantageously very simple and easy to realise.

The invention naturally also discloses a universal joint, which comprises two universal joints according to any one of the preceding claims, located at ends of a connecting shaft.

With this solution, the above-described benefits are advantageously extended to all the universal joint.

Further characteristics and advantages of the invention will emerge from a reading of the description that follows, provided by way of non-limiting example, with the aid of the figures of the accompanying tables.
Figure 1 is an isometric view of a universal shaft according to an embodiment of the present invention, from which the protective system has been removed.
Figure 2 is a larger-scale view of figure 1 which shows one of the universal joints in detail.
Figure 3 is a view from above of the joint of figure 2.
Figure 4 is section IV-IV of figure 3.
Figure 5 is section V-V of figure 3.
Figure 6 is a perspective view of the universal shaft of figure 1, shown with the protective system.
Figure 7 is a larger-scale view of figure 6 which shows the protection of one of the universal joints in detail.
Figure 8 is section VIII-VIII of figure 7.

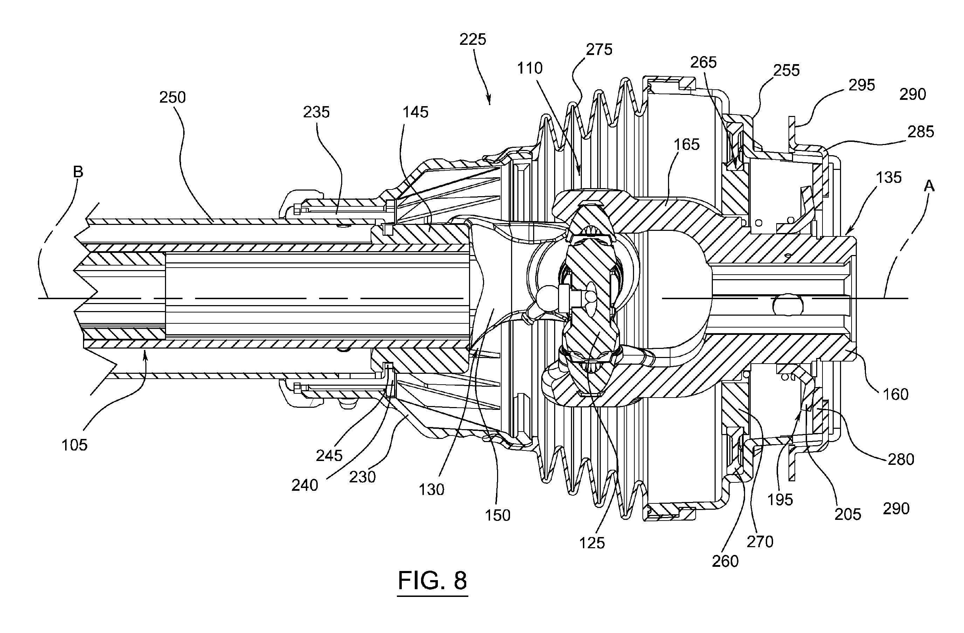

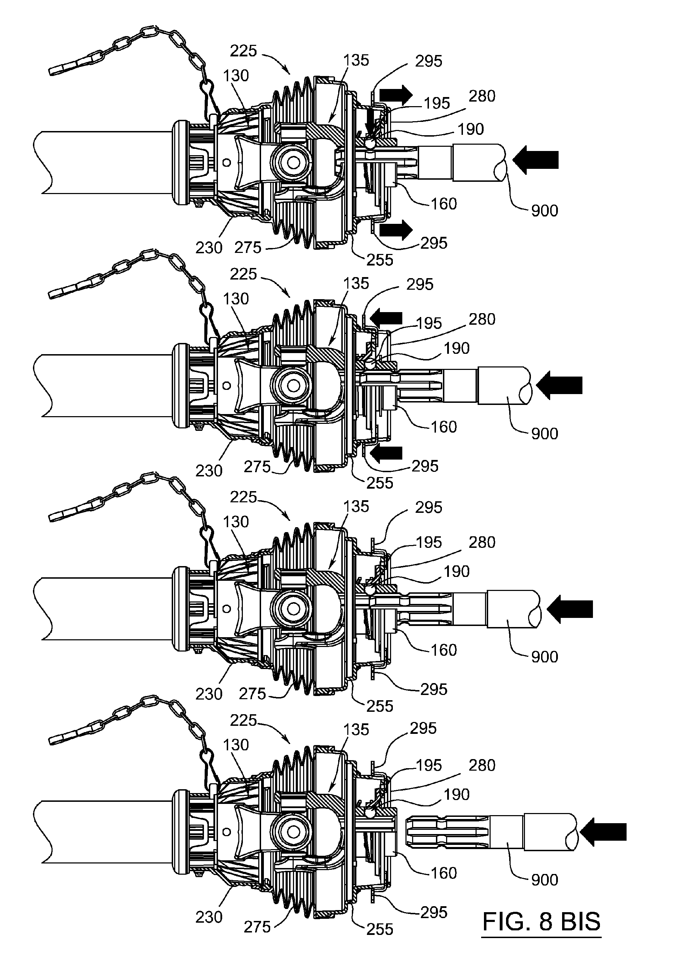

Figure 8 BIS is the section of figure 8 shown in different moments during the enmeshing of the power take-off.

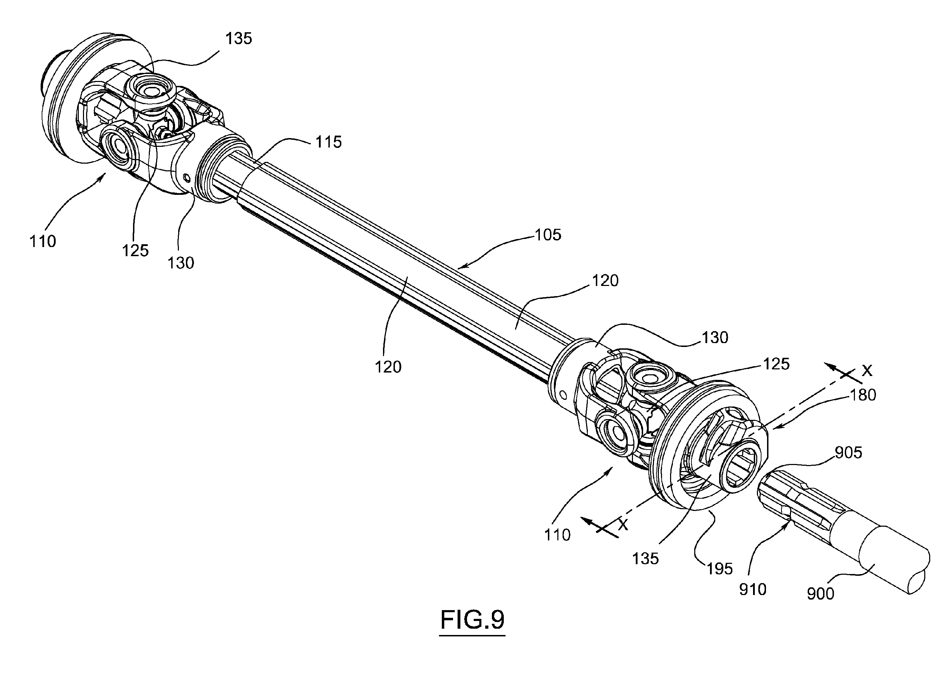

Figure 9 is an isometric view of a universal shaft according to an alternative embodiment of the present invention, which is without the protective system.

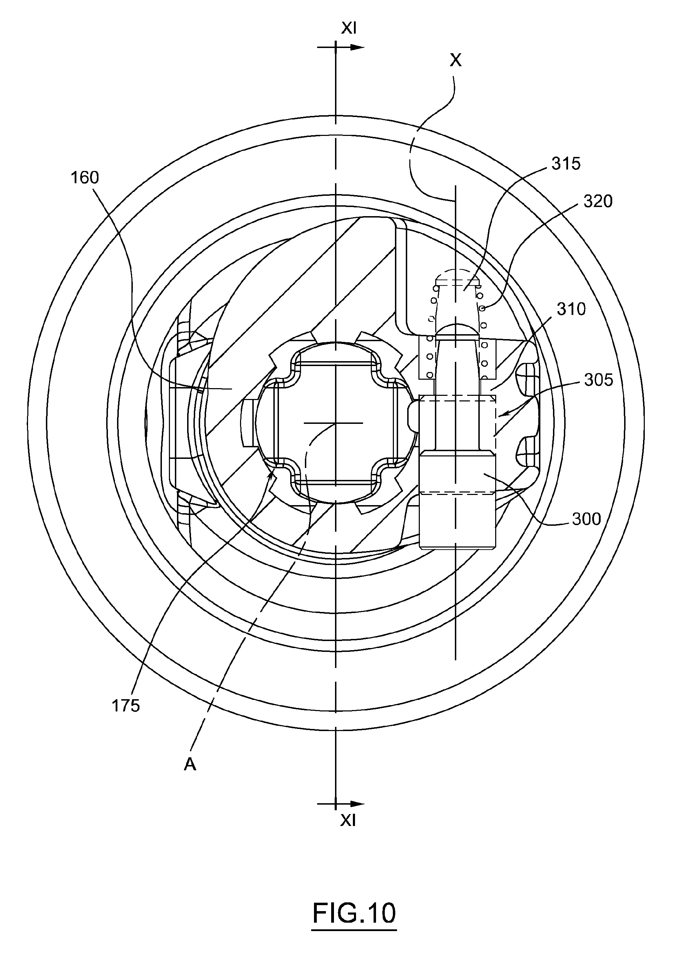

Figure 10 is a section X-X of figure 9 shown in larger scale.

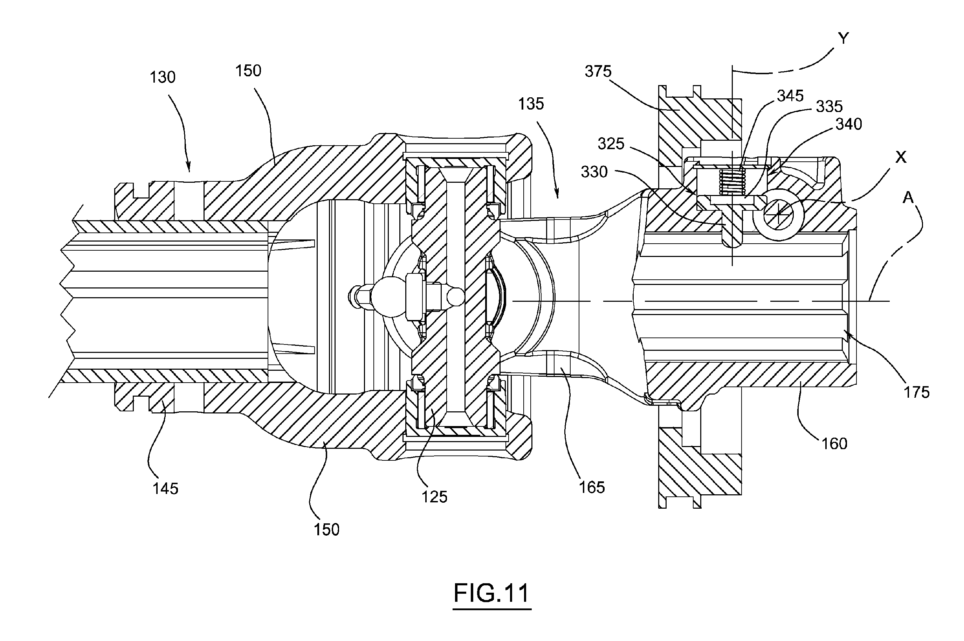

Figure 11 is section XI-XI of figure 10.

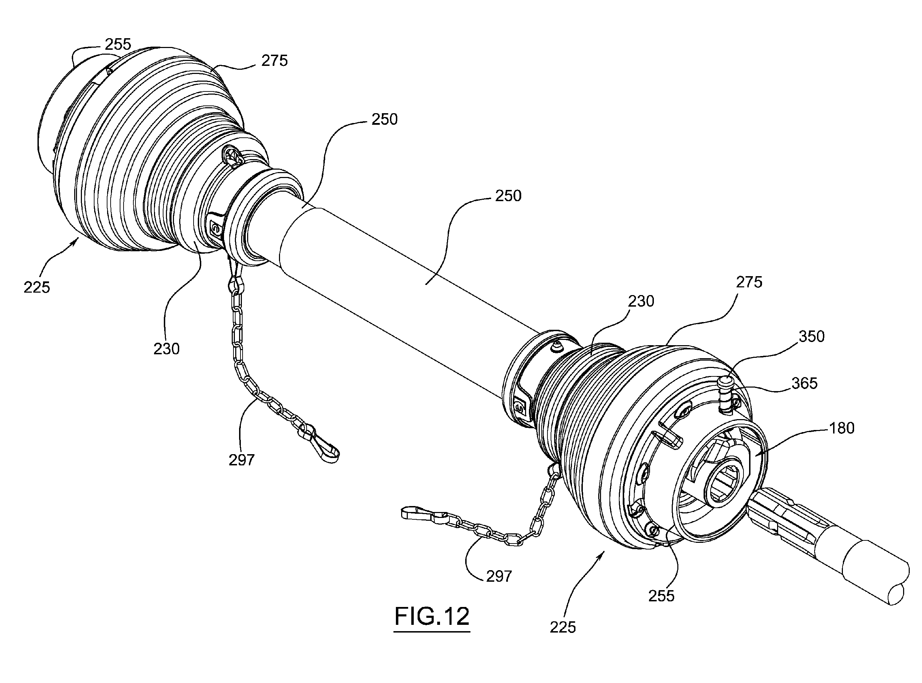

Figure 12 is a perspective view of the universal shaft of figure 10, shown with the protective system.

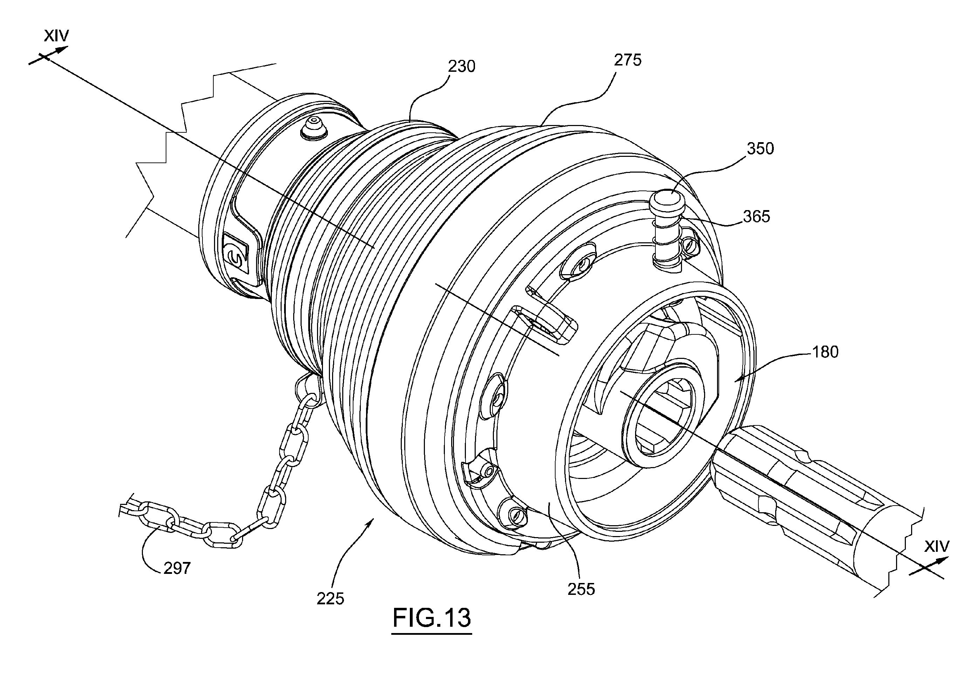

Figure 13 is a larger-scale view of figure 12 which shows the protection of one of the universal joints in detail.

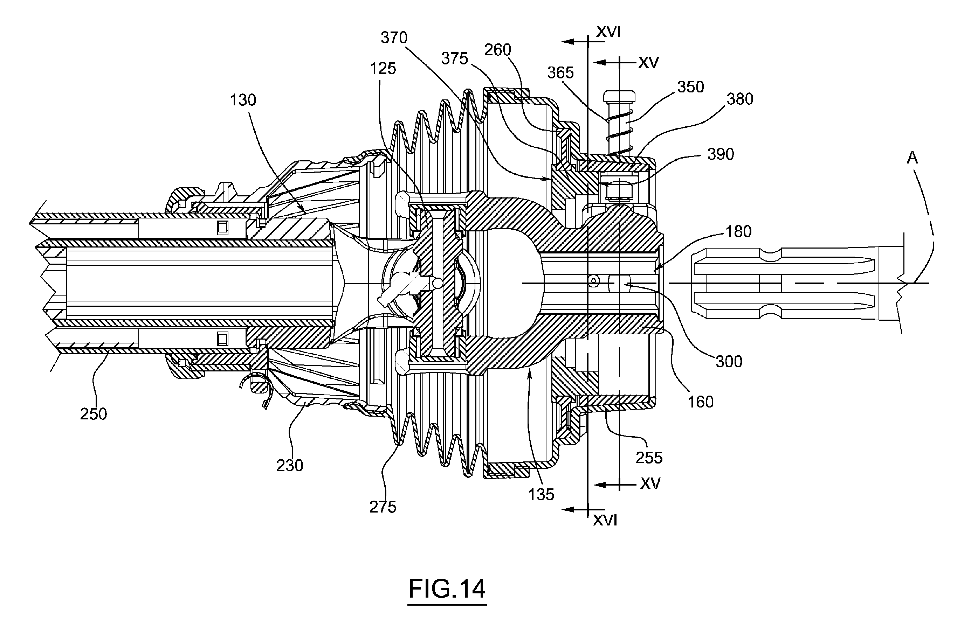

Figure 14 is section XIV-XIV of figure 13.

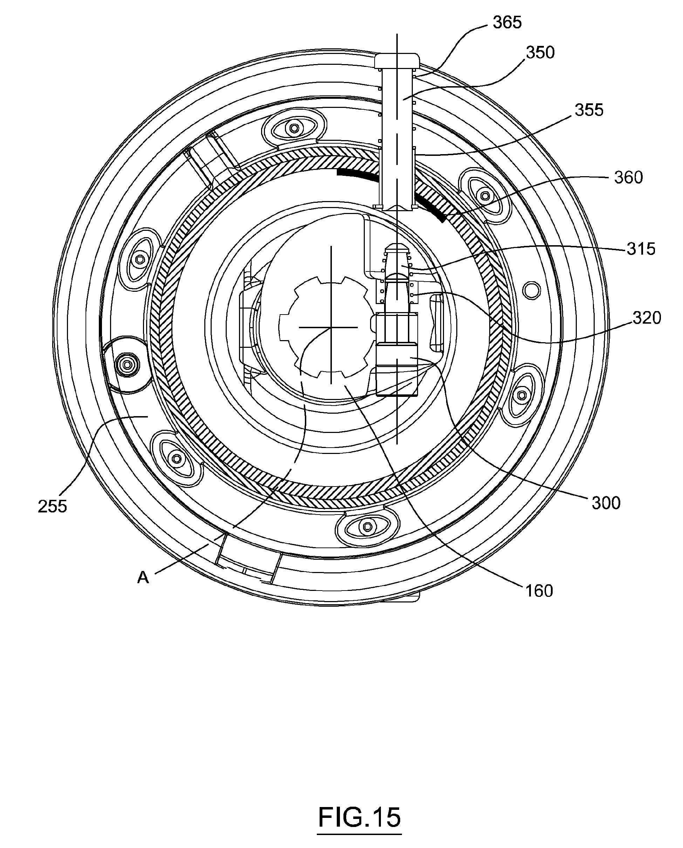

Figure 15 is section XV-XV of figure 14.

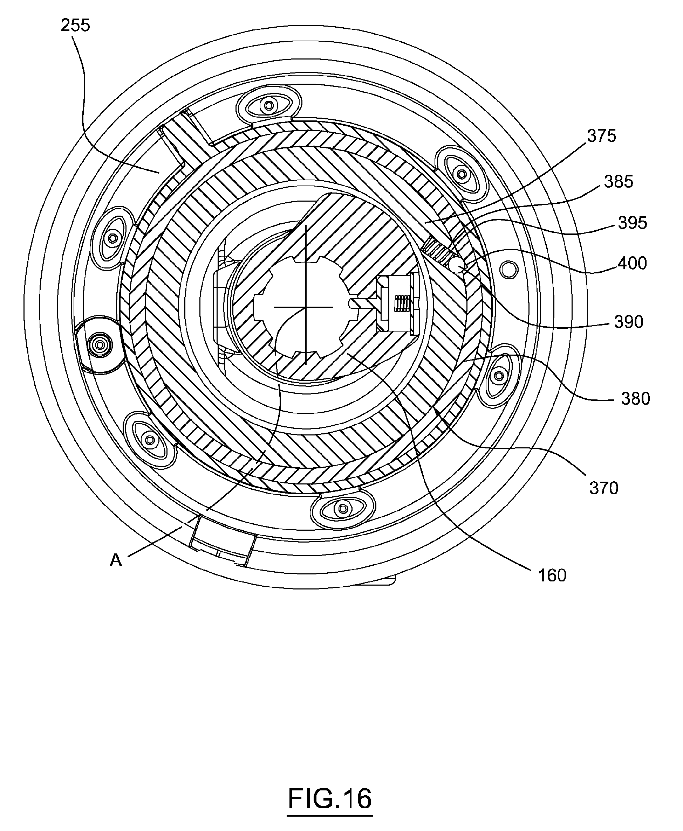

Figure 16 is section XVI-XVI of figure 14.

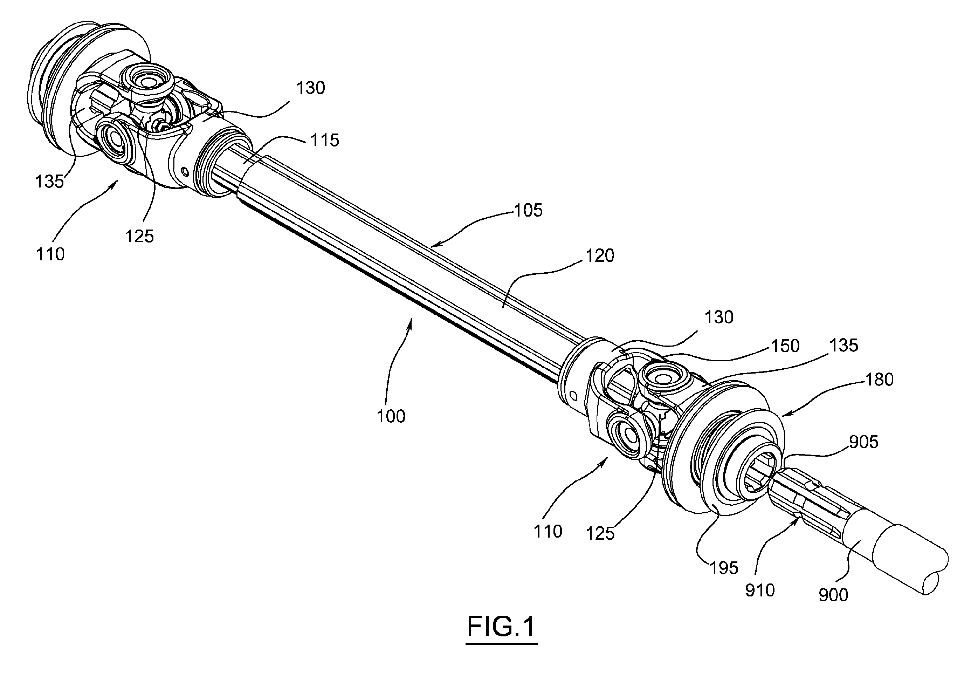

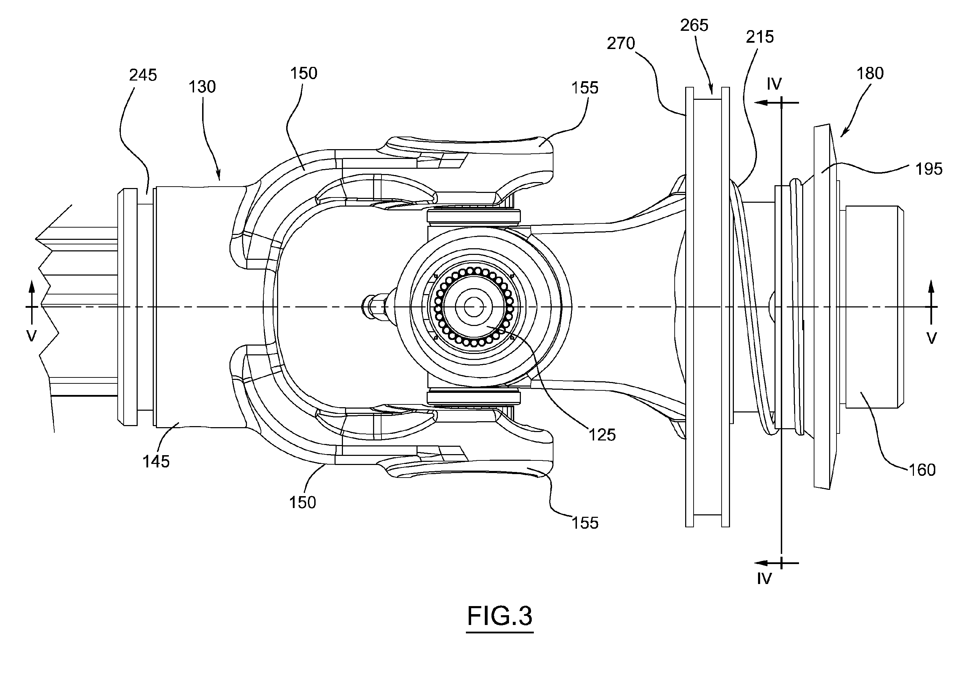

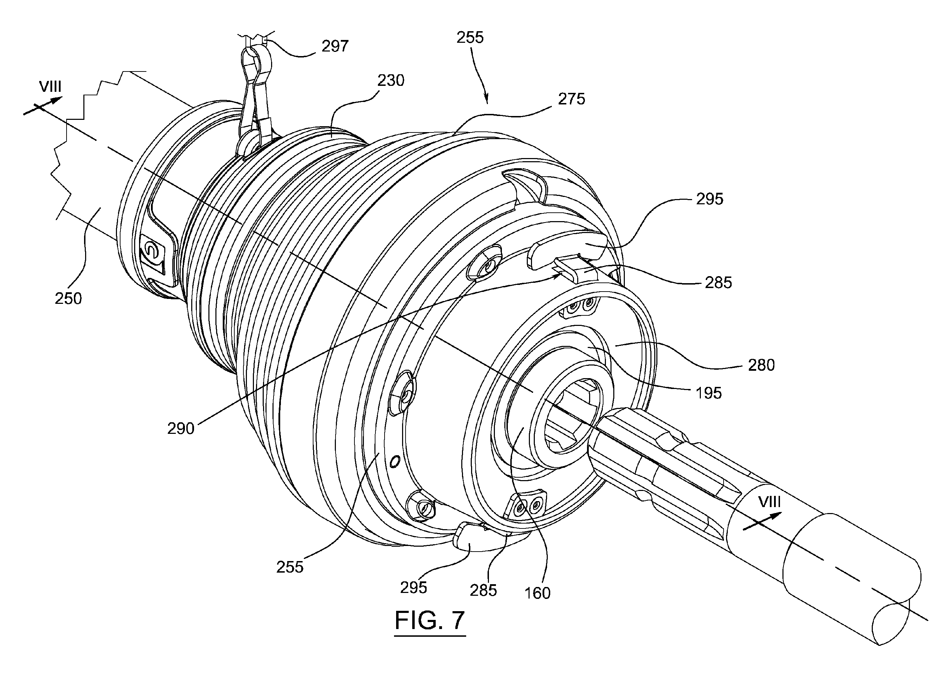

Figures 1 to 8 illustrate a universal shaft 100, which is principally intended for use in the agricultural sector, to connect the power take-off of a tractor 900 to an identical power take-off of a tool towed, borne or semi-borne by the tractor.

The power take-off 900 is essentially constituted by a grooved rotating shaft, which projects from the tractor (or the agricultural tool) and exhibits a bevelling 905 at a free end thereof and a circumferential gully 910 in the intermediate position.

The universal shaft 100 comprises a connecting shaft 105 and two universal joints 110 fixed to opposite ends of the connecting shaft 105, of which a first universal joint is destined to be connected to the power take-off of the tractor 900, and a second universal joint is destined to be connected to the power take-off of the tool.

In the illustrated examples, the connecting shaft 105 is telescopic and comprises two tubes, one coaxially inserted into another, of which an internal tube 115 and an external tube 120, cross sections of which are profiled so as to achieve a kinematic sliding pair enabling them to slide reciprocally in the direction defined by the longitudinal axis thereof, while constraining them bilaterally in rotation. In other embodiments, the connecting shaft 105 can be rigid and inextensible.

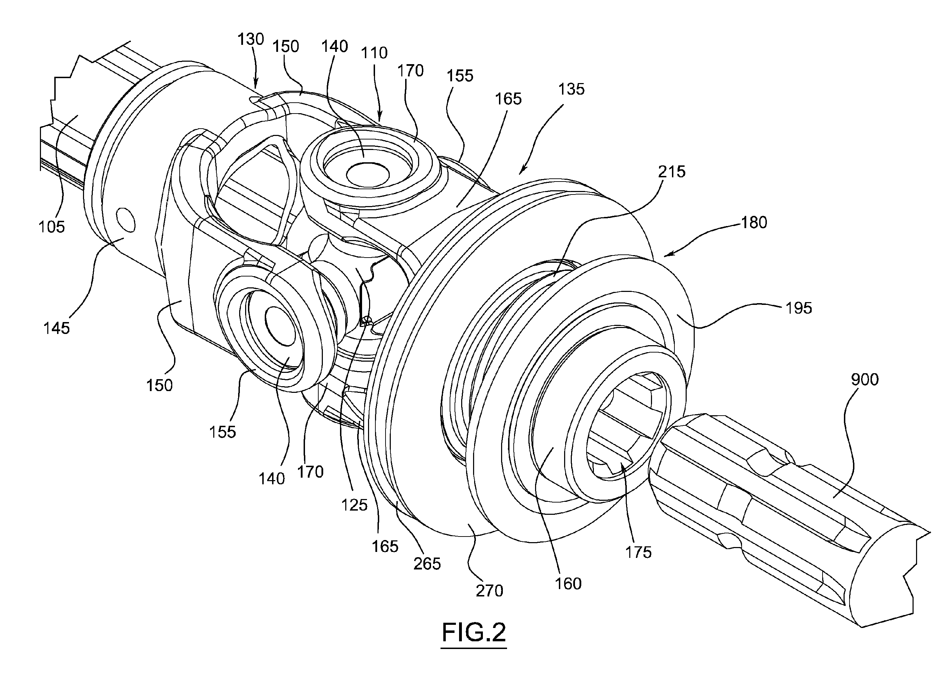

As illustrated in figure 2, each universal joint 110 comprises a cross 125 to which two forks are hinged, of which a first fork 130 is solidly constrained to the connecting shaft 105 and a second fork 135 is suitable for engaging to the power take-off 900.

The cross 125 comprises a central body from which two pairs of arms or pins 140 project, where the pins of each pair are coaxial with one another and project from diametrically-opposite sides of the central body. The axis of each pair of pins 140 is coplanar and offset by ninety degrees with respect to the axis of the other pair of pins 140.

The first fork 130 comprises a hub 145 that can be inserted and fixed to the end of the connecting shaft 105. From the hub 145 project two opposite brackets 150, each of which has an eyelet 155 having an axis perpendicular to the axis of the hub 145. The eyelets 155 of the two brackets 150 are coaxial with each other and arranged in a diametrically opposite position with respect to the axis of the hub 145. The eyelets 155 are threaded onto a respective pair of opposite pins 140 of the cross 125, so as to achieve an articulated joint.

In an entirely alike way, the second fork 135 comprises a hub 160 and two opposite brackets 165 projecting from the hub 160, each of which exhibits an eyelet 170 having an axis perpendicular to the axis of the hub 160. The eyelets 170 of the two brackets 165 are coaxial to one another and are arranged in diametrically opposite position with respect to the axis of the hub 160. The eyelets 170 are inserted on the other pair of opposite pins 140 of the cross 125, so as to achieve a hinged joint with a rotation axis offset by 90° with respect to the joint of the first fork 130.

A grooved cavity 175 is coaxially formed in the hub 160 of the second fork 135, which can snugly insert on the power take-off 900. In other words, the grooved cavity 175 has a transversal section substantially coinciding with the cross section of the power take-off 900, i.e. having a profile comprising an alternation of protruding ribs and grooves, which can slidably couple respectively with the grooves and with the protruding ribs of the power take-off 900.

A mechanism 180 for axially blocking the power take-off 900 in the cavity 175 is also mounted on the hub 160.

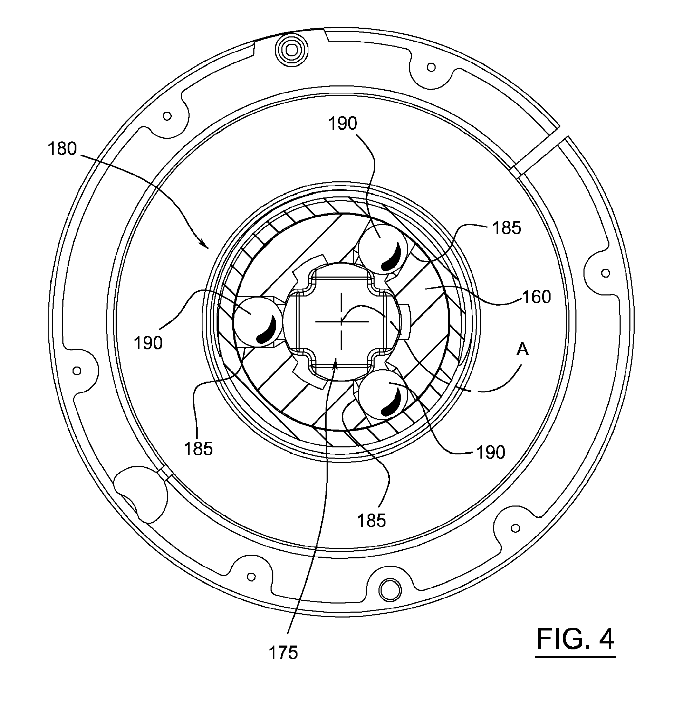

As illustrated in figure 4, this mechanism 180 comprises a plurality of radial holes 185, which are formed in the lateral wall, such that the axis of each thereof is perpendicular and incident with regard to the axis A of the hub 160. In particular, the axes of the radial holes 185 are angularly equidistant and substantially coplanar, so as to intersect the axis A of the hub 160 at substantially the same point. The radial holes 185 are further positioned so as to open inside the cavity 175, each at a respective groove.

The mechanism 180 further comprises a plurality of pawls 190, each of which is snugly inserted in a respective hole of the radial holes 185, in which it is free to slide towards the axis A of the hub 160, up to reaching a position of maximum insertion where it is held in place by an annular abutment which restricts the section of the respective radial hole 185 at the opening of the cavity 175. In this position of maximum insertion, each pawl 190 protrudes partially within the cavity 175, so as to almost completely block the channel in which the respective radial hole 185 opens. Each pawl 190 is further dimensioned so that, when in the position of maximum insertion, it substantially occupies the entire axial dimension of the relative radial hole 185, thus being substantially tangential to the external surface of the hub 160. In the illustrated example, the pawls 190 are ball bearings but could be replaced by spherical pins or by other bodies able to slide along the axis of the radial holes 185.

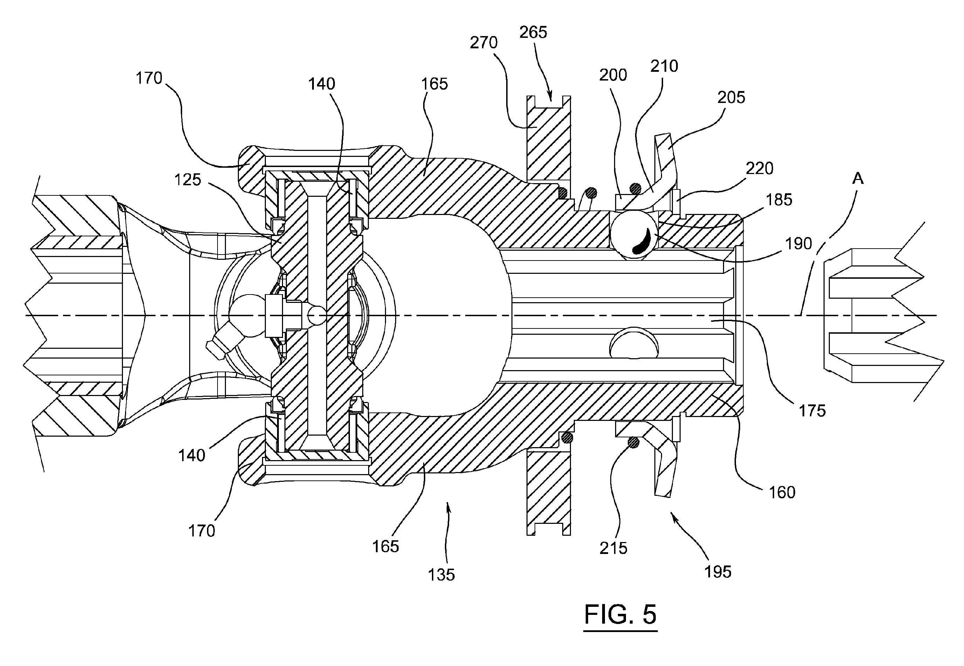

The mechanism 180 further comprises a collar 195 (see figure 5), which is coaxially inserted on the hub 160 and can slide thereon in the direction of the axis A. In particular, the collar 195 comprises a cylindrical portion 200 having an internal diameter that is substantially equal to the external diameter of the hub 160, a front flange 205 having a substantially radial development, and a tapered intermediate portion 210 that broadens from the cylindrical portion to the front flange 205. The cylindrical portion 200 faces towards the brackets 165, while the front flange 205 is directed toward the free end of the hub 160. A compression spring 215 is interposed between the front flange 205 and the brackets 165, which spring 205 is inserted on the hub 160 and pushes the entire collar 195 forward, until it reaches an advanced position where it is retained by an endrun ring 220. In this advanced position, the cylindrical portion 200 of the collar 195 is aligned and obstructs the radial holes 185, blocking the pawls 190 in the maximum insertion position thereof. Starting from this advanced position, the collar 195 can be made to reverse, in the opposite direction to the action of the spring 215, towards a retracted position, in which the radial holes 185 are open and aligned with the tapered portion 210 (see the second view, shown in figure 8 BIS). In this configuration, the pawls 190 can therefore slide in the corresponding radial holes 185 from their position of maximum insertion outwards, up to contacting the tapered portion 210, completely freeing the cavity 175 of the hub 160.

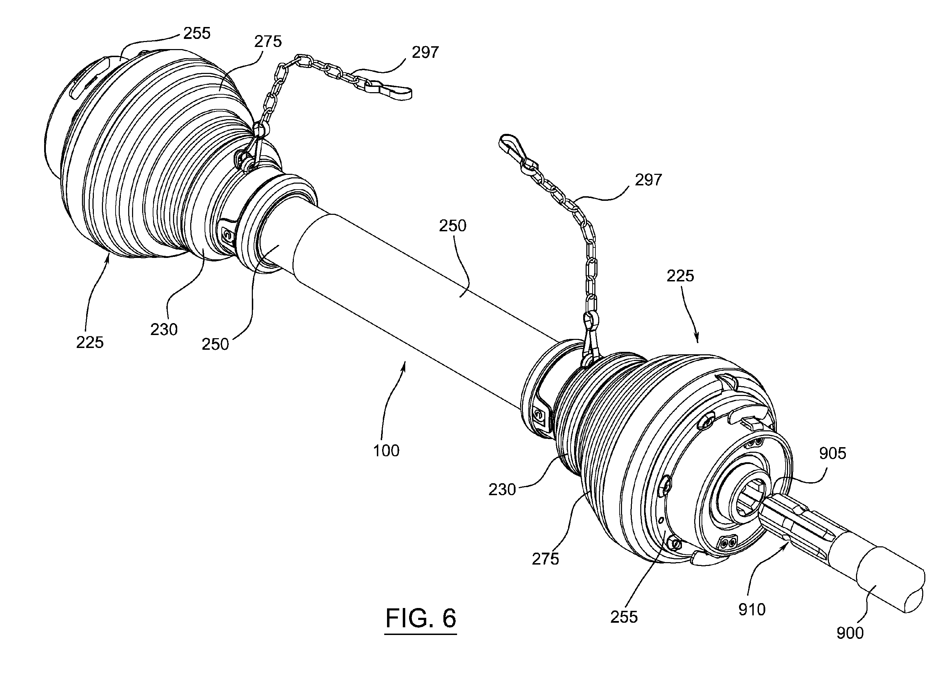

As shown in figure 6, each universal joint 110 is completely covered by a protective cover 225.

In particular, the protective casing 225 comprises a first cover 230, which is substantially shaped as a cylindrical tubular element with a variable diameter that coaxially covers the hub 145 and the brackets 150 of the first fork 130, leaving the cross 125 substantially uncovered (see figure 8). The first cover 230 is coupled to the first fork 130 by means of a rotational joint which solidly constrains it in the axial direction, allowing only reciprocal rotations around the axis B of the hub 145. The rotational joint is defined by a washer 235, which is fixed internally to the first cover 230 and is coaxially inserted on the hub 145. The ring 235 has an annular profiled member 240 which projects radially from the internal surface towards the centre. This annular profiled member 240 can be continuous or discontinuous, for example defined by a plurality of shaped fins, which are arranged coplanar and in spoke fashion around the axis of the washer 235. In both cases, the annular profiled member 240 is accommodated in an annular gully 245, which is formed in the external surface of the hub 145 and extends around an axis coinciding with the axis B. In this way, the annular profile 240 and the annular gully 245 overall realize a rotary coupling which enables the first cover 230 to rotate relative to the first fork 130, linking them to each other in an axial direction. A cylindrical tube 250 can also be fixed coaxially to the nut 235, which at least partially covers the connecting shaft 105.

The protective casing 225 also comprises a second cover 255, shaped substantially as a cylindrical tubular element with a variable diameter coaxially covering the hub 160 and the brackets 165 of the second fork 135, substantially leaving the cross 125 uncovered. This second cap 255 too is coupled to the second fork 135 by means of a rotational joint which solidly constrains them in an axial direction, allowing only reciprocal rotations about the axis A of the hub 160. In the example illustrated herein, this rotational joint is defined by a washer 260, which is fixed internally to the second cover 255 and is coaxially inserted on the hub 160. This washer 260 is shaped substantially as an annular plate lying in a perpendicular plane to the axis A. The internal edge of the washer 260 is accommodated in an annular groove 265 formed in the outer edge of a washer-holding ring 270. The washer-holding ring 270 is coaxial to the hub 160 and is solidly fixed thereto in a position between the collar 195 and the brackets 165. In this way, the ring 260 and the washer-holder ring 270 realise in their entirety a rotary coupling which enables the second cover 255 to rotate with respect to the second fork 135, while constraining them in the axial direction.

The first cover 230 and the second cover 255, which can be made of a rather rigid material (e.g. plastic or metal), are connected together by a flexible sleeve 275, preferably bellows-conformed and made of a plastic material, which externally covers the cross 125. In this way, the protective casing 225 becomes a very solid and compact assembly, which because of the deformability of the intermediate sleeve 275 can accommodate any relative displacement between the two forks 130 and 135 of the universal joint 110, guaranteeing at all times an effective protection in any operating condition. As illustrated in figure 8, the second cover 255 comprises a cylindrical portion which also covers the blocking mechanism 180. In order to allow engagement and disengagement of the power take-off 900, an annular plate 280 is inserted inside the cylindrical portion. This annular plate 280 is coaxially inserted on the hub 160 so as to be in direct contact with the front flange 205 of the collar 195, on the side thereof opposite the spring 215. The annular plate 280 has two projecting appendages 285, which are arranged symmetrically on diametrically opposite sides thereof. Each of the appendages 285 protrudes from the second cap 255 through a respective rectangular slot 290, which is mainly developed in a parallel direction to the axis A of the hub 160 and has a width that is substantially constant and equal to the width of the relative projecting appendage 285. In this way, the annular plate 280 is in general terms solid in rotation with the second cover 255 but can slide with respect thereto in the direction of the axis A of the hub 160, pushing the collar 195 to move in an opposite direction to the spring 215 action. To make the flow of the annular plate 280 more uniform and facilitate the manual actuation of the annular plate 280 from externally of the protective casing 225, each projecting appendage 285 terminates with an enlarged flap 295 that rests and slides on the external surface of the second cover 255.

In use, the protective casing 225 of both universal joints 110 is fixed to a fixed part of the tractor or respectively the tool, for example by means of two chains 297, so as to remain stationary with respect to the whole drive shaft 100 rotating internally thereof. In particular, the first cover 230, the second cover 255, the flexible sleeves 275, the cylindrical tubes 250 and also the annular plates 280 remain stationary. In this way, the power take-off shaft 100 is completely enclosed by the protective casings 225, preventing any contact with the user. Of course, if the connecting shaft 105 is inextensible, the two cylindrical tubes 250 could be replaced by a single rigid tube which rigidly connects the first covers 230, thus forming a single protective casing. The engagement and disengagement operations of the power take-offs 900 are much facilitated, whatever the operation to be carried out, without ever having to disassemble the protective casings 225 from the universal shaft 100, since it is sufficient for the operator to pull back the fins 295 of the annular plate 280, thereby transmitting the action to the collar 195 which releases the pawls 190 of the blocking mechanism 180.

By way of example, figure 8 BIS illustrates the operation of the system from the bottom upwards during engagement with a power take-off 900. In order for the engagement to be possible, it is necessary first to make sure that the grooved cavity 175 of the second fork 135 are in phase with the power take-off 900; therefore the operator may have to rotate the universal shaft 100. With the system described above, this step is very simple, since the operator does not have to touch the second fork 135, but the orientation is made directly from the outside of the protective casing 225, simply by pulling back either of the two broadened fins 295. In this way, the annular plate 280 is pressed against the second fork 135, constraining the second fork 135 solidly to the protective casing 225. At this point, the operator only has to rotate the protective casing 225 in order to appropriately orientate the cavity 175 of the second fork 135 and fit it onto the power take-off 900. As soon as the power take-off shaft 900 is internal of the cavity 175, the operator can press both broadened fins 295, so as to push the collar 195 of the locking mechanism 180 into the retracted position, thereby enabling the pawls 190 to slide in relative radial holes 185. Continuing with the insertion, the power take-off 900 contacts the ends of the pawls 190 and, thanks to the presence of the bevelling 905, moves them freely from the position of maximum insertion thereof, pushing them radially externalwards. At this point, the operator can release the fins 295, allowing the spring 215 to push back the collar 195 towards the advanced position. As long as the pawls 190 remain in contact with the ribs of the power take-off 900, the pawls 190 partly protrude from the external surface of the hub 160, stopping the collar 195 in an intermediate position. As the insertion of the power take-off 900 continues, as soon as the pawls 190 are located at the circumferential gully 910, the tapered portion 210 of the collar 195, driven by the spring 215, forces the pawls 190 to snap back to the position of maximum insertion thereof, where they are subsequently blocked by the cylindrical portion 200. In this way, the pawls 190 occupy the circumferential gully 910, axially constraining the power take-off 900 to the second fork 135.

The disengaging of the power take-off 900 involves the operator simply pressing the broadened fins 295 again, returning the collar 195 into the retracted position and freeing the pawls 190. At this point, thanks to the rounded surfaces of the circumferential gully 910 and the pawls 190, the simple action of disinsertion of the power take-off 900 enables the pawls 190 to be distanced radially and then axially separate the power take-off 900 from the second fork 135.

Naturally, the above-described steps are the same for both universal joints 110 located at opposite ends of the shaft.

In figures 9 to 16, a universal shaft 100 of a second embodiment is illustrated, which differs from the previous embodiment only in the aspects that will be described below. Unless explicitly stated otherwise, all the characteristics described above for the first embodiment are identically repeated for the second embodiment and are therefore denoted using the same reference numerals in the drawings.

In the second embodiment, the blocking mechanism 180 of the power take-off 900 comprises a bolt 300 (see figure 10), preferably of cylindrical shape, a central axis X of which is perpendicular and not incident to the axis A of the cavity 175 of the hub 160, and is substantially tangential to a circle circumscribed about the cross section of the cavity 175. The bolt 300 is coaxially and slidably housed in a cylindrical seating 305, which is formed in a offset lateral portion of the hub 160. The cylindrical seating 305 is open at an end, passes through one of the grooves of the axial cavity 175, and is closed at the opposite end by a bottom wall 310.

The bolt 300 is provided with a projecting coaxial pin 315 which is snugly slidably inserted internally of a through-hole afforded in the bottom wall 310. The free end of the pin 315 protrudes from the opposite side of the bottom wall 310 and has an enlarged head. A compression spring 320 is inserted on the projecting portion of the pin 315, which compression spring 320 is interposed and axially blocked between the enlarged head and the bottom wall 310. In this way, the compression spring 320 constantly pushes the bolt 300 into a position of complete insertion in the relative cylindrical seating 305, in which it is in abutment against the bottom wall 310, as illustrated by a dashed line in figure 10.

Thanks to the arrangement of the cylindrical seating 305, when the bolt 300 is in this fully-inserted position a portion of the lateral surface thereof partially occupies the axial cavity 175 of the hub 160, transversally occluding one of the grooves thereof.

Starting from this position of maximum insertion, the bolt 300 can be pushed in the opposite direction to the action of the compression spring 320, which slides the bolt in the cylindrical seating 305 until it reaches a position in which it leaves the axial cavity 175 of the hub 160 completely free, as shown by a continuous line.

As shown in figure 11, the blocking device also comprises a small piston 325, the axis Y of which is perpendicular to both the axis X of the bolt 300 and the axis A of the cavity 175 of the hub 160. The piston 325 is positioned on the hub 160 flanked to the bolt 300. The piston 325 comprises a pin 330, which is slidably and coaxially inserted into a radial through-hole that is afforded in the lateral wall of the hub 160, at the position of the groove occluded by the bolt 300. The pin 330 projects coaxially from a plate 335, which remains located on the outside of the hub 160. The plate 335 is coaxially inserted in a cylindrical seating 340, in which it can slide in the direction of the axis Y. In particular, the cylindrical seating 340 of the plate 335 partially intersects and thus communicates with the cylindrical seating 305 of the bolt 300. The cylindrical seating 340 is further inferiorly closed by the lateral wall of the hub 160 and superiorly by a top wall. Further,a compression spring is also received 345 inside the cylindrical seating 340, which is interposed between the top wall and the plate 335, so as to constantly push the piston 325 towards the advanced position illustrated in figure 11.

When the piston 325 is in the advanced position, the plate 335 is in contact with the lateral wall of the hub 160 and partially occupies the cylindrical seating 305 that receives the bolt 300. In this way, the lateral surface of the plate 335 can come into contact with the rear end of the bolt 300 which is located in the unblocked position, so as to prevent the bolt from returning towards the blocked position. Simultaneously, the pin 330 projects radially internally of the axial cavity 175 of the hub 160.

Starting from this advanced position, the piston 325 can be displaced in opposition to the spring 345 towards a retracted position which is not illustrated in figure 11. In this retracted position, the pin 330 is fully retracted into the radial hole, while the plate 335 is raised into a position such as to stay clear of the cylindrical seating 305 of the bolt 300, which is then free to slide towards the blocked position, pushed by the spring 320.

As illustrated in figure 15, to return the bolt 300 into the unblocked position, the cylindrical portion of the second cover 255 that covers the mechanism 180, comprises an auxiliary button 350, which is movable in relation to the second cover in the transversal direction with respect to the axis of the hub 160 so as to be able to go to press against the pin 315 of the bolt 300, on the opposite side to the spring 320.

In the illustrated example, this auxiliary button 350 is also conformed as a pin, which is inserted in a guide bushing 355 fixed to a through-hole of the second cover 255, so that the pin exhibits an internal end and an external end with respect to the second cover 255, and so that the pin axis is perpendicular and not incidental to the axis A of the hub 160. In particular, the guide bushing 355 is positioned so that the axis of the button 350 can be aligned with the axis X of the bolt 300, when the second cap 255 and the second fork 135 are located in a predetermined mutual angular position, which will be referred-to in the following as the aligned position. In this aligned position, the button 350 is opposite the pin 315 of the bolt 300, and can slide along its own axis between a position of minimum insertion and a position of maximum insertion in the second cover 255, travelling sufficiently to contact the pin 315 up to pushing it until the bolt 300 is in the unblocked position.

In detail, the position of minimum insertion is defined by an endrun ring 360 attached to the internal end of the button 350. Normally, the button 350 is held in this position of minimum insertion by a spring 365, which is threaded on the button and is compressed between the external surface of the second cover 255 and an enlarged head located at the external end of the button 350. In the position of minimum insertion, the button 350 is separated from the pin 315 and is sufficiently distant from the hub 160, so as not to interfere with the reciprocal rotation between the second fork 135 and the second cover 255. Starting from the position of minimum insertion, the button 350 can be pushed manually towards the position of maximum insertion and from externally of the second cap 255.

To facilitate the achieving of the alignment between the button 350 and the pin 315 of the bolt 300, the rotational joint connecting the second cover 255 to the second fork 135 can comprise a free wheel 370 (see figure 16), which freely allows reciprocal rotation in a predetermined direction (the direction of normal rotation of the universal shaft 100), while it prevents rotation in the opposite direction exactly when the second cap 255 and the second fork 135 are in the aligned position.

In the illustrated example, the free wheel 370 comprises two concentric rings that are coaxial with the axis A of the hub 160, of which an internal ring 375, which is solidly fixed to the hub 160 in a position comprising the blocking mechanism 180 and the brackets 165, and an external ring 380, which is solidly fixed to the second cover 255 and can rotate around the internal ring 375. A blind guide hole 385 is formed in the internal ring 375, which flows on the lateral surface of the internal ring 375 and has an inclined axis, perpendicular but not incidental to the axis A of the hub 160. A pawl 390 is accommodated in the guide hole 385, in this case a ball bearing, and a spring 395 for pushing the pawl 390 externally against the internal cylindrical surface of the outer ring 380. A small cavity 400 is formed on the internal surface of the external ring 380, which faces the guide hole 385, when the second cover 255 and the second fork 135 are in the aligned position. When this occurs, the pawl 390 pushed by the spring 395 partially projects from the guide hole 385 and occupies the cavity 400. The cavity 400 is conformed in such a way that, in this position, the pawl 390 prevents rotation of the external ring 380 with respect to the internal ring 375 in a direction, but allows rotation in the opposite direction. In the present example, the cavity 400 has a substantially triangular section with sides of different inclination, so that by rotating the external ring 380 in the allowed direction, the less inclined side pushes the pawl 390 into the guide hole 385 without hindering rotation, while by rotating the outer ring 380 in the opposite direction, the more inclined side does not allow the pawl 390 to return, blocking the rotation.

To engage the second fork 135 on a power take-off 900, the bolt 300 of the blocking mechanism 180 is initially in the unblocked position, constrained by the plate 335 of the piston 325 which is located in the forward position (as shown in the continuous line in figures 10 and 11).

In this configuration, the second fork 135 is neared to the power take-off 900 and placed in phase therewith. The phasing of the second fork 135 is performed by rotating the second cover 255, up to bringing it into an aligned position with the second fork 135. In this position, the free wheel 370 enables reciprocal rotation in only one direction (i.e. in the rotation direction of the power take-off 900), while in the opposite direction the second fork 135 is solidly constrained to the second cover 255 and therefore to the entire protective casing 225. Therefore, by rotating the protective casing 225 in the opposite direction to the allowed direction, the second fork 135 can be rotated up to bringing the grooved cavity 175 into phase with the power take-off 900.

At this point, the power take-off shaft 900 can be freely inserted into the grooved cavity 175 of the hub 160 up to when the bevel 905 reaches contact with the projecting portion of the pin 330 of the blocking mechanism 180. Continuing in the insertion, the chamfer 905 acts as a cam which transforms the relative axial movement of the power take-off shaft 900 into an axial movement of the pin 330, pushing the entire piston 325 toward the retracted position. When the piston 325 reaches the retracted position, the plate 335 frees the constraint of the bolt 300, which, however, is prevented from moving towards the blocking position by the rib of the power take-off 900 which occupies the relative groove of the hub 160. The insertion of the power take-off shaft 900 is then continued until the circumferential groove 910 is substantially coplanar to the cylindrical seating 305 of the bolt 300. In this position, the rib of the power take-off 900 is interrupted, so that the bolt 300 is pushed by the spring 320 to snap into the blocked position (as shown in dashed line in figure 10). Once this position has been reached, the bolt 300 is transversally engaged in the circumferential gully 910, thus axially and bilaterally blocking the power take-off 900 to the hub 160.

To disengage the power take-off 900, the operator must rotate the protective casing until it reaches the aligned position thanks to the free wheel 370. As mentioned in the foregoing, this position corresponds to the alignment between the auxiliary button 350 and the pin 315 of the bolt 300 (see figure 15). In this way, all the operator has to do is push the button 350 against the pin 315, and then push them both up to bringing the bolt 300 into the unblocked position.

At this point, the drive shaft 100 is simply pulled back by deinserting the hub 160 from the power take-off 900. As soon as the power take-off 900 retreats beyond the pin 330, the piston 325 snaps back into the advanced position thereof, pushed by the spring 345, to newly constrain the bolt 300 in the unblocked position, ready to be coupled to another power take-off, as described herein above.

It is observed here that in some embodiments the constraining system of the bolt 300 in the blocked position (in this case the piston 325) can be absent. In this case, the auxiliary button 350 should also be activated during the engagement step.

Obviously a technical expert in the sector might make numerous modifications of a technical-applicational nature to the invention, without forsaking the protective scope of the invention as claimed in the following.

## Claims

1. A universal joint (110) comprising a cross (125) to which two forks are hinged, of which a first fork (130) comprises a hub (145) fixable to an end of a connecting shaft (105) and a second fork (135) comprising a hub (160) provided with a coaxial cavity (175) able to receive a power take-off (900), and a protective casing (225) which can cover the first and second fork, **characterised in that** the protective casing comprises:
a first cover (230) solidly constrained to the first fork (130) and coupled thereto by a rotational joint (235), which enables reciprocal rotations of the hub (145) of the first fork (130) about the axis (B),
a second cover (255) solidly constrained to the second fork (135) and coupled thereto by a further rotational joint (260), which enables reciprocal rotations of the hub of the second fork (135) about the axis (A), and
a flexible sleeve (275) interposed so as to connect the first cap (230) to the second cover (255).

2. The joint (110) of claim 1, **characterised in that** the flexible intermediate sleeve (275) has a bellows configuration.

3. The joint (110) of any one of the preceding claims, **characterised in that** the hub (160) of the second fork (135) comprises a blocking mechanism (180) able to axially constrain the power take-off (900) to the central cavity (175), and the second cover (255) comprises a mobile command organ (280, 350), which is activatable from outside the protection casing (225) and can act on the blocking mechanism (180) so as to release the constraint.

4. The joint (110) of claim 3, **characterised in that** the command organ comprises an annular plate (280), which is coaxially inserted on the hub (160) of the second fork (135) and is provided with one or more appendages (285) which project externally of the second cover (255) through respective slots (290), wherein the slots (290) are profiled in such a way that the plate (280) is solid in rotation with the second cover (255) and can slide with respect thereto in the direction of the axis (A) of the hub (160) of the second fork (135).

5. The joint (110) of claim 4, **characterised in that** the blocking mechanism (180) comprises:
a plurality of radial holes (185) passing through the hub (160) of the second fork (135),
a plurality of pawls (190), each of which is inserted in a respective hole of the radial holes (185) and can slide internally thereof between an engaged position, in which it at least partially projects into the cavity (175) of the hub, and a disengaged position, in which it leaves the cavity (175) substantially unoccupied,
a collar (195) coaxially inserted on the hub (160) and able to slide thereon in an axial direction between a blocked position, in which it occludes the radial holes (185) and constrains each pawl (190) to remain the engaged position, and an unblocked position, in which it frees the radial hole (185) and enables each pawl (190) to displace into the disengaged position thereof, and
elastically-acting means (215) for constantly pushing the collar (195) into a blocked position.

6. The joint (110) of claim 3, **characterised in that** the command organ comprises a button (350), which is solidly constrained to the second cover (255) and is mobile thereon in a transversal direction with respect to the axis (A) of the hub (160) of the second fork (135).

7. The joint (110) of claim 6, **characterised in that** the blocking mechanism (180) comprises:
a bolt (300) solidly constrained to the hub (160) of the second fork (135) and able to slide, along an axis (X) that is perpendicular to the axis (A) of the hub (160), between an engaged position, in which it partially occupies the cavity (175) of the hub (160), and a disengaged position, in which it leaves the cavity (175) substantially unoccupied,
elastically-acting means (320) for constantly pushing the bolt (300) into the engaged position, and
a pin (315) fixed to the bolt (300) and able to be pressed so as to move the bolt (300) into a disengaged position, in opposition to the elastically-acting means (320).

8. The joint (110) of claim 7, **characterised in that** the rotational joint between the second fork (135) and the second cover (255) comprises a free wheel (370), which can enable a reciprocal rotation in a predetermined direction and prevent rotation in an opposite direction, when the second fork (135) and the second cover (255) are in a reciprocal angular position in which the command button (350) is aligned with the pin (315) of the bolt (300).

9. The joint (110) of any one of claims from 6 to 8, **characterised in that** the command button (350) is conformed as a pin having a perpendicular axis with respect to the axis (A) of the hub (160) of the second fork (135), which is coaxially inserted in a through-hole in the second cover (255) and able to slide internally thereof between a distal position and a proximal position to the axis of the hub (160).

10. A universal shaft (100) comprising two universal joints (110) according to any one of the preceding claims, located at ends of a connecting shaft (105).
